**Europäisches Patentamt**

**European Patent Office**

**Office européen des brevets**

(19)

(11) Veröffentlichungsnummer: **0 019 654**
**B1**

(12) # EUROPÄISCHE PATENTSCHRIFT

(45) Veröffentlichungstag der Patentschrift:
06.01.82

(21) Anmeldenummer: 79102916.8

(22) Anmeldetag: 10.08.79

(51) Int. Cl.³: **B 23 B 29/24**

(54) Revolver für Drehmaschine.

(30) Priorität: 25.05.79 DE 2921284

(43) Veröffentlichungstag der Anmeldung:
10.12.80 Patentblatt 80/25

(45) Bekanntmachung des Hinweises auf die Patenterteilung:
06.01.82 Patentblatt 82/1

(84) Benannte Vertragsstaaten:
AT CH DE FR GB IT SE

(56) Entgegenhaltungen:
CH-A- 74 963
DE-A-1 952 050
DE-A-2 147 911
DE-A1-2 549 633
DE-A1-2 603 260
DE-A1-2 656 608
DE-A1-2 702 171
DE-B1-2 436 220
DE-U-1 969 414
TOOLING & PRODUCTION; Band 44, Nr. 6, 1978
Ohio
WERBEPROSPEKT »The American Eagle 2000«
Seite 78

(73) Patentinhaber: Gildemeister AG, Morsestrasse 1,
D-4800 Bielefeld (DE)

(72) Erfinder: Henneberg, Hasso, Matthiasstrasse 3,
D-3000 Hannover (DE)
Erfinder: Hesse, Werner, Rotkamp 19,
D-3002 Wedemark 1 (DE)
Erfinder: Junike, Wilhelm, Paracelsusweg 6,
D-3000 Hannover (DE)

(74) Vertreter: Schmidt-Evers, Jürgen et al,
Dipl.-Ing.H.Mitscherlich Dipl.-Ing.K.Gunschmann
Dr.rer.nat.W.Körber Dipl.-Ing.J.Schmidt-Evers
Steinsdorfstrasse 10, D-8000 München 22 (DE)

WERKSTATT UND BETRIEB, Band 109, Nr. 8, 1976
München
M. WANNER »Eine Baureihe numerisch gesteuerter Drehautomaten«
Seiten 447 bis 455
WERKSTATT UND BETRIEB, Band 111, Nr. 11,
1978
München
H. HAMMER et al. »Wirtschaftlichkeitsvergleich
programm- und numerisch gesteuerter Drehautomaten kleiner und mittlerer Baugröße
Seiten 745 bis 748

EP 0 019 654 B1

## Revolver für Drehmaschine

Die Erfindung bezieht sich auf einen verbesserten Revolver für Drehmaschinen, wie er im Oberbegriff des Patentanspruchs 1 angegeben ist und zum Stand der Technik gehört.

Aus dem Stand der Technik sind für die Aufnahme einer Anzahl von Bearbeitungswerkzeugen wie Meißel als Außendrehwerkzeuge und Bohrstangen als Innenbearbeitungswerkzeuge Revolverköpfe bekannt, die an einem Revolverschlitten angebracht sind, der wiederum auf einem Schrägbett einer Drehmaschine in zwei Richtungen verschiebbar angeordnet ist.

Die an dem Revolver vorgesehenen Aufnahmen für die Bearbeitungswerkzeuge sind bekanntermaßen, z. B. auf zwei konzentrische Teilkreise verteilt, und zwar derart, daß die Aufnahmen des einen Teilkreises jeweils auf der Winkelhalbierenden zwischen den Aufnahmen des anderen Teilkreises liegen, so daß eine symmetrische Verteilung aller Aufnahmen vorliegt. Im Regelfall ist die Höhe bzw. der Abstand der Drehachse der Drehmaschine und damit des zu bearbeitenden Werkstückes über dem Schrägbett vorgegeben. Dadurch ist nach dem Stand der Technik auch der maximale Abstand der Schaltachse des Revolvers über dem Schrägbett, d. h. der maximale Durchmesser der Werkzeugträgerscheibe des Revolvers festgelegt, damit die eingespannten Werkzeuge bei Bewegung des Revolvers und seines Revolverträgers auf dem Schrägbett bis zur Mitte des Werkstückes, d. h. der Drehachse derselben, verfahren bzw. herangeführt werden können.

Eine maximale Begrenzung für den Durchmesser der Werkzeugträgerscheibe stellt auch eine Begrenzung für die maximale Anzahl der möglichen Werkzeugaufnahmen, insbesondere für Bohrstangen auf diesem Revolver dar. Es ist nämlich zu berücksichtigen, daß bei einer zu dichten Nachbarschaft der einzelnen Werkzeughalterungen des Revolvers der für die Bearbeitung mit einem in einer Halterung eingespannten Werkzeug notwendige Freiraum unzulässig eingeengt werden würde.

Es ist eine Aufgabe der vorliegenden Erfindung, einen gegenüber dem Stand der Technik derart verbesserten Revolver anzugeben, der bei vorgegebenem Abstand der Spindelachse der Drehmaschine von ihrem Bettschlitten eine größere Anzahl von Werkzeugaufnahmen und/ oder einen größeren Freiraum für das Werkstück bietet.

Diese Aufgabe der Erfindung wird für einen Revolver nach dem Oberbegriff des Patentanspruches 1 erfindungsgemäß mit den Merkmalen des Kennzeichens des Patentanspruches 1 gelöst. Weitere Ausgestaltungen der Erfindung gehen aus den Unteransprüchen hervor.

Mit wenigen Worten zusammengefaßt besteht das Erfindungsprinzip des neuen Revolvers darin, daß die Schaltachse dieses Revolvers einen vergleichsweise zum Abstand der Spindelachse der Drehmaschine vom Schrägbett bzw. vom Bettschlitten größeren Abstand zu diesem vorzusehen und für die aufeinanderfolgenden Werkzeuge der beiden Teilkreise, in denen die Bohrungen der Werkzeughalterungen jeweils äquidistant verteilt sind, ungleiche Schaltwinkel für das Weiterschalten vorzusehen. Vorzugsweise sind die auf einem Teilkreis äquidistant verteilten Werkzeugaufnahmen bzw. Werkzeugspitzen in einem von der Winkelhalbierenden der entsprechenden äquidistant verteilten Werkzeugaufnahmen bzw. -halterungen des anderen Teilkreises verschiedenen Winkel angeordnet. Die Arretierung des Revolvers in der jeweiligen Arbeits-Winkelstellung erfolgt durch kraftschlüssige, insbesondere hydraulische Klemmung.

An dieser Stelle sei bemerkt, daß eine Anordnung zum Steuern der Indexbewegung des Revolvers einer Stanze bekannt ist (DE-A-21 47 911), bei dem die Stanzwerkzeuge nur auf einem einzigen Teilkreis unterschiedliche Abstände haben, und zwar weil sie verschieden groß sind. Dementsprechend muß auch der Revolver mit unterschiedlichen Schaltwinkeln umgeschaltet werden. Ansonsten liegen keine vergleichbaren Verhältnisse mit dem Erfindungsgegenstand vor.

Weitere Erläuterungen der Erfindung und ihrer Ausgestaltungen gehen aus der nachfolgenden Figurenbeschreibung hervor.

Fig. 1 zeigt in einer Seitenansicht den auf einem dargestellten Teilstück der Drehmaschine und dem Schrägbett angebrachten erfindungsgemäßen Revolver, und zwar in seiner Stellung zu dem Futter der Drehmaschine.

Fig. 2 zeigt eine teilweise geschnittene Seitenansicht der im Revolverträger angebrachten Halterung für den neuen Revolver.

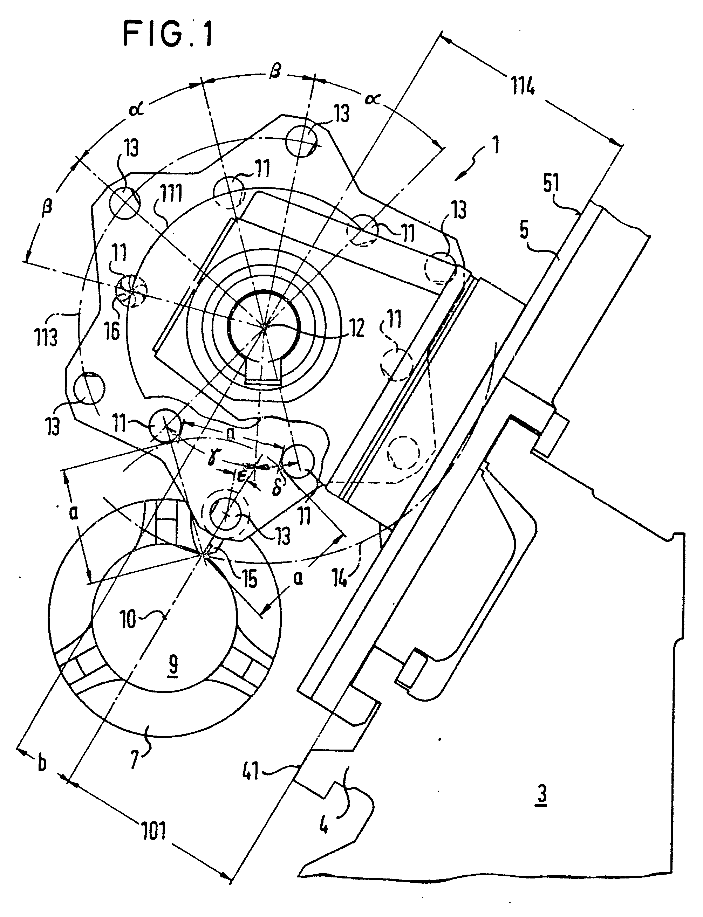

Die Fig. 1 zeigt eine stirnseitige Ansicht des erfindungsgemäßen Revolvers 1, als Werkzeugträger in seiner Anordnung zu dem in dieser Drehmaschine 3 schräggestellten Bettschlitten 5 und zu dem im Futter 7 der Drehmaschine eingespannten Werkstück 9 sowie mit seiner gemäß einer bevorzugten Ausgestaltung vorgesehenen Aufteilung der Bohrungen 11 und 13 für die Halterungen und der Bearbeitungswerkzeuge. Der Bettschlitten 5 ist, wie an sich bekannt, in horizontaler Richtung gleitend verschiebbar auf dem Schrägbett 4 des in der Fig. 1 dargestellten Anteils der Drehmaschine 3 angebracht. Die Richtung dieser Verschiebbarkeit ist somit senkrecht zur Darstellungsebene dieser Fig. 1 gerichtet.

Mit 10 ist die (senkrecht zur Darstellungsebene der Fig. 1 gerichtete) Spindelachse der Drehmaschine 3 bzw. des eingespannten, zu bearbeitenden Werkstückes 9 bezeichnet. Die (ebenfalls senkrecht zur Darstellungsebene der Fig. 1 gerichtete) Schaltachse des Revolvers 1 ist mit 12 bezeichnet.

Bei den bekannten Drehmaschinen einschlägiger Art liegen die Spindelachse 10 der Drehmaschine und die Schaltachse 12 des Revolvers in einer zum Schrägbett 4 bzw. zum Bettschlitten 5 parallelen Ebene, so daß der Abstand 101 der Spindelachse 10 und der Abstand der Schaltachse 12 von der Oberfläche 51 des Bettschlittens 5 gleich groß sind. Damit können bei diesen bekannten Anordnungen in den Halterungen des Revolvers eingespannte Außenbearbeitungswerkzeuge bei Parallelverschiebung des Revolvers an das Werkstück und bis an dessen Spindelachse 10 herangeführt werden, nämlich derart, daß die in der Parallelebene des Schrägbettes 4 bewegte Spitze des beispielsweise Drehmeißels 15 vom Umfang bis zur Mitte des Werkstückes 9 zum Schrägbett parallel geführt ist. Dieses Prinzip bedingt jedoch, daß bei den bekannten Revolver-Drehmaschinen, deren Abstand 101 der Spindelachse 10 des Werkstückes von der Oberfläche 41 des Schrägbettes 4 eine vorgegebene Größe ist, der maximale Radius des Flugkreises 14 der Spitze eines eingespannten Bearbeitungswerkzeuges 15 begrenzt ist, nämlich daß dieser Radius des Flugkreis-Durchmessers nicht größer als dieser Abstand sein kann. Anders ist dies jedoch bei der nachfolgend noch näher zu erläuternden Erfindung.

Nach dem wie aus Fig. 1 ersichtlichen Prinzip der Erfindung kann hier jedoch entgegen dem voranstehend beschriebenen Stand der Technik der Durchmesser des Revolvers 1 bzw. der Radius des Flugkreises 14 erheblich größer als der (vorgegebene) Abstand 101 zwischen Spindelachse 10 und Oberfläche 41 gemacht werden, d. h. nach der Erfindung liegt die Schaltachse 12 des Revolvers 1 in einer Ebene über der Oberfläche 41 des Schrägbettes 4, deren Abstand 114 von der Oberfläche 41 um das Maß b größer als der Abstand 101 ist. Soll das in der Halterung der Bohrung 13 eingespannte Werkzeug 15, wie oben beschrieben, auch hier in der zum Schrägbett 4 parallelen Lage dem Werkstück 9 von dessem Umfang bis zu dessen Spindelachse 10 zugeführt werden, wird der z. B. in Fig. 1 dargestellte Drehmeißel 15 in dem erfindungsgemäßen Revolver 1 in einem Winkel E zur jeweiligen Radialrichtung des Revolvers 1 eingespannt. Die Heranführung des Drehmeißels 15 an das Werkstück 9 bzw. die Bearbeitung desselben ist dann gleich der Praxis des Standes der Technik.

Bei einem erfindungsgemäßen Revolver kann die Schaltachse auch nur nahezu parallel bzw. etwas schräg zur Spindelachse ausgerichtet sein.

Aus der wie aus der Fig. 1 ersichtlichen erfindungsgemäßen Verlagerung der Schaltachse 12 des Revolvers 1 gegenüber der Spindelachse 10, bezogen auf das Schrägbett 4 bzw. auf den Bettschlitten 5, läßt sich ein weiter unten noch näher zu erörternder, zusätzlicher Vorteil nutzbar machen.

Diese erfindungsgemäße Anordnung der Schaltachse 12 des Revolvers 1 in einem Abstand 114, der um das Maß b größer als der Abstand 101 der Spindelachse 10 der Drehmaschine 3 ist, ermöglicht die Verwendung eines Revolvers bzw. einer Werkzeugträgerscheibe mit entsprechend größerem Durchmesser. Dieser vergrößerte Durchmesser bietet insbesondere die Möglichkeit, eine größere Anzahl von Halterungen bzw. von hierfür vorgesehenen Bohrungen 11 und 13 für einzuspannende Innen- und Außenbearbeitungswerkzeuge (wie z. B. der dargestellte Drehmeißel 15 und die dargestellte Bohrstange 16) auf dem vergrößerten Umfang des Revolvers 1 anzuordnen.

Für den Revolver 1 ist gemäß einem erfindungsgemäßen Merkmal ein Umschalten desselben mit aufeinanderfolgend ungleich großen Schaltwinkeln $\gamma \neq \delta$ vorgesehen. Für die Definition der Winkel $\gamma$ und $\delta$ ist der Schnittpunkt (siehe Fig. 1) des (kleineren) Teilkreises 111 mit der durch die Spindelachse 10 gehenden, zur Oberfläche 51 parallelen Ebene bzw. der Schnittpunkt der Oberkante des zum Schrägbett parallel eingespannten Drehmeißels 15 mit diesem Teilkreis 111 wesentlich. Von diesem Schnittpunkt rechnet der Winkel $\gamma$ bis zu der einen Bohrung 11 und der Winkel $\delta$ bis zu der anderen Bohrung 11 (wie dies die Fig. 1 zeigt).

Eine Ausgestaltung der Erfindung ist, die untereinander äquidistanten Halterungen der Bohrungen 11 des einen kleineren Teilkreises 111 in — wie auch aus der Fig. 1 ersichtlicher — im Winkel verdrehter Stellung gegenüber den untereinander äquidistanten Halterungen d. h. Bohrungen 13 des anderen größeren Teilkreises 113 anzuordnen. Der jeweilige Winkel $\alpha$ zwischen einer Bohrung 13 des einen Teilkreises 113 und der dazu im Uhrzeigersinn benachbarten Bohrung 11 des anderen Teilkreises 111 ist, wie ersichtlich, deutlich größer als der Winkel $\beta$ zwischen dieser Bohrung 11 und der wiederum im Uhrzeigersinn benachbarten nächsten Bohrung 13 des größeren Teilkreises. Diese ungleiche, gegenüber der bekanntermaßen verwendeten winkelhalbierenden Aufteilung unterschiedliche, erfindungsgemäß alternierende Winkelverteilung der Bohrungen 11 und 13 der Halterungen der beiden Teilkreise 111, 113 auf dem Revolver 1 ist nützlich für eine optimale Ausnutzung eines erfindungsgemäß angeordneten und ausgestalteten Revolvers 1, nämlich für eine maximale Anzahl von Bohrungen 11 und 13 für Halterungen.

Mit diesem Merkmal alternierend unterschiedlicher Winkelaufteilung $\alpha$ und $\beta$ zwischen benachbarten Bohrungen 11 und 13 wird nämlich für eine um das Maß b gegenüber der Spindelachse 10 des Werkstückes 9 versetzte Schaltachse 12 des Revolverkopfes 1 eine optimale Ausnutzung des für Halterungen der Bohrungen 11 und 13 verfügbaren Raumes der Peripherie des Revolvers 1 erreicht. Wie aus der Fig. 1 ersichtlich, haben die beiden Bohrungen 11, die der Bohrung 13 mit dem in ihrer Halterung eingespannten Drehmeißel 15 am nächsten stehen, jeweils wenigstens etwa gleich großen Abstand a von der Spitze d. h. der Wirkstelle dieses eingespannten, das Werkstück 9 bearbeitenden Meißels 15. Die beiden jeweiligen Abstände zwischen diesen der Bohrung 13 mit dem Drehmeißel 15 benachbarten Bohrungen 11 bis zum Rand des Futters 7 bzw. Werkstückes 9, und zwar diese Abstände gemessen parallel zur Oberfläche 51 des Bettschlittens 5, nämlich in Richtung der Verschiebung des Revolvers auf dem Bettschlitten 5, sind mit dieser ungleichen Winkelaufteilung $\alpha$ und $\beta$ wenigstens nahezu etwa gleich groß, wie dies beim Stand der Technik bei nicht um das Maß b versetzter Schaltachse bei bekannter genau winkelhalbierender Aufteilung der Fall ist. Bei der Erfindung ist trotz dieser vorteilhaften Versetzung der Schaltachse 12 um das Maß b der gleich große Freiraum zwischen dem Futter 7 und den Halterungen der Bohrungen 11 wiederhergestellt, die der sich gerade in Arbeitsstellung befindlichen Halterung benachbart sind.

Gemäß einer weitergehenden Ausgestaltung ist auch der Abstand zweier benachbarter Bohrungen 11 des kleineren Teilkreises 111 mit a bemessen, so daß die Spitze des Meißels 15 und die benachbarten Bohrungen 11 ein gleichseitiges Dreieck bilden.

Diese ungleiche Winkelaufteilung $\alpha \neq \beta$ läßt somit eine solche Anzahl von Halterungen der Bohrungen 11, 13 auf dem Revolver 1 zu, wie sie auf einem bekannten Revolver mit gleich großem Flugkreis-Durchmesser angebracht werden können, der aber nur bei einer Drehmaschine mit vergleichsweise größerem Abstand der Spindelachse vom Schrägbett, d. h. nur bei einer größeren Maschine, verwendet werden könnte.

Im entsprechenden Sinne ist ein Revolver mit den erfindungsgemäßen Merkmalen auch für solche Fälle von Vorteil, bei denen zwar keine größere Anzahl von Halterungen auf dem Revolver verlangt wird, jedoch ein größerer Freiraum zwischen dem Futter 7 der Drehmaschine und den jeweils benachbarten Halterungen, z. B. für einen größeren Durchmesser zu bearbeitender Werkstücke 9, gefordert wird. Auf einem entsprechend der erfindungsgemäßen Versetzung der Schaltachse 12 um das Maß b größeren Revolvers kann für diesen Fall eine unverändert groß bleibende Anzahl von Bohrungen 11, 13 der Halterungen in entsprechend größeren Abständen auf den beiden Teilkreisen 111 und 113 verteilt werden.

Im Gegensatz zu einem bekannten Revolver mit von Halterung zu Halterung gleich bleibend großem Winkel ist es bei einem Revolver mit wie bisher alternierend unterschiedlich großen Winkeln $\alpha$ und $\beta$ erforderlich, alternierend unterschiedlich große Schaltwinkel $\gamma$ und $\delta$ vorzusehen. Wie aus der Fig. 1 ersichtlich, gilt die Beziehung $\alpha + \beta = \gamma + \delta$. Die Aufteilung der Winkelsumme $\alpha + \beta$ auf die Winkel $\gamma$ und $\delta$ ist jedoch davon etwas verschieden.

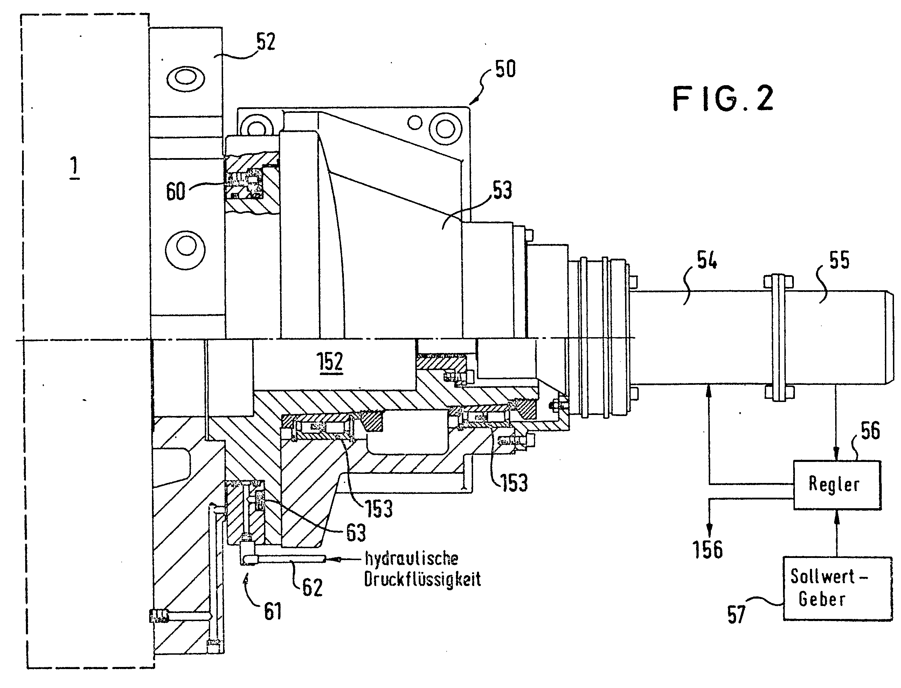

Fig. 2 zeigt in einer Seitenansicht, d. h. aus einer gegenüber der Fig. 1 um 90° gedrehten Richtung, den Träger 50 für die lediglich im Umriß schematisch angedeutete daran (auswechselbar) befestigte erfindungsgemäß angeordnete Revolverscheibe 1. Dieser auf dem Schrägbett in der dazu parallelen Ebene verschiebbar angebrachte Träger 50 nach Fig. 2 umfaßt außer der beim Weiterschalten der Revolverscheibe 1 entsprechend schrittweise weiterzudrehenden Grundplatte 52 das dazu feststehende Lagergehäuse 53, den daran befestigten Antriebsmotor 54 und den Winkelgeber 55. Dazu gehört ein Regler 56, dem von einem Sollwertgeber 57 der Sollwert für den Weiter-Schaltvorgang des Revolvers zugeführt wird.

Für die Lagerung der Welle 152 der Grundplatte 52 im Lagergehäuse 53 sind Wälzlager 153 vorgesehen.

Der für den Antrieb der Grundplatte 52 vorgesehene Motor 54 ist vorzugsweise ein Gleichstrom-Servomotor, der mit einem spiel- und reibungsarmen Getriebe mit der Welle 152 gekoppelt ist. Der Winkelgeber 55 ist ein incrementales Meßsystem, das auch im Motor 54 integriert vorhanden sein kann. Dieses Meßsystem hat ein hohes Auflösungsvermögen und erlaubt damit das Schalten kleinster Winkelincremente. Es wird damit höchste Genauigkeit der Winkeleinstellung des Revolvers bzw. der jeweiligen Werkzeuge gegenüber dem Werkstück erreicht. Vorteilhafterweise ist eine mechanisch arbeitende Bremse 60 in einfacher oder mehrfacher auf dem Umfang verteilter Ausführung vorgesehen, mit der eine ständige Reibungs-Bremsung zwischen der zu verdrehenden Grundplatte 52 und dem stationären Lagergehäuse 53 bewirkt wird. Mit dieser Bremse werden insbesondere solche Rotations-Trägheitsmomente gebremst, die ein Überlaufen der geforderten Winkel-Einstellposition mit sich bringen würden. Diese Bremse 60 ist z. B. eine federbelastete, im Lagergehäuse 53 gehaltene und an der Grundplatte 52 anliegende Reibscheibe.

Die Arretierung der Winkel-Einstellung der Grundplatte 52 und damit der Revolverscheibe 1 gegenüber dem Lagergehäuse 53 und damit gegenüber der Drehmaschine erfolgt mit Hilfe einer hydraulischen Einrichtung 61. Während der Einstellung bzw. Rotation der Grundplatte 52 ist diese hydraulische Einrichtung 61 außer Betrieb.

Im Augenblick der gewünschten Arretierung jedoch wird über die Rohrleitung 62 der Kolbenzylindereinheit 63 Druck zugeführt, der einen Kolben gegen einen der Teile drückt, so daß das Lagergehäuse 53 und die Grundplatte 52 praktisch gegeneinander drehsicher gehalten sind. Das Lagergehäuse 53 und die Grundplatte 52 werden somit hydraulisch gegeneinander, und zwar wieder lösbar, geklemmt.

Abgesehen davon, daß mit dieser Art der Arretierung der Grundplatte 52 und damit der Revolverscheibe 1 der Vorteil geschaffen ist, daß beliebig vorgebbare Einstellwinkel des Revolverkopfes gegenüber dem Werkstück vorgegeben und arretiert eingehalten werden können, hat diese Art der Arretierung zusammen mit der um das Maß b vorgesehenen Versetzung der Schaltachse den schon oben angedeuteten Vorteil, daß im Fall einer übermäßigen, auf das Außenbearbeitungswerkzeug, z. B. auf den Drehmeißel 15, einwirkender Kraft ein Ausweichen von Werkzeug und Revolverscheibe erfolgen kann. Da die Arretierung mit der hydraulischen Einrichtung 61 nur kraftschlüssig ist und dieser Kraftschluß zudem durch Wahl des hydraulischen Druckes (und der Konstruktionsabmessungen der Einrichtung 61) einstellbar gewählt werden kann, läßt sich eine solche Bemessung treffen, die im regelmäßigen Betriebsfall ausreichende Arretierung liefert, im Falle der Überlast jedoch das bereits erwähnte Ausweichen eintreten läßt. Dies bietet eine wichtige Überlast-Schutzfunktion, die z. B. vergleichsweise leichteren konstruktiven Aufbau zuläßt.

Der Antrieb des Revolvers 1 mit Hilfe des Motors 54 kann in beiden Drehrichtungen erfolgen, so daß das jeweils erforderliche Werkzeug auf kürzestem Weg in die Arbeitsposition gebracht werden kann.

Vom bereits erwähnten Sollwertgeber 57 werden die Steuerwerte an den Regler 56 gegeben, der zusammen mit dem incrementalen Meßsystem dafür Sorge trägt, daß der Motor 54 die jeweils richtige geforderte Winkelstellung für den Revolver 1 auch tatsächlich erreicht. Lagekorrekturen des Werkzeuges erfolgen über die Steuerung. Diese kann eine feste Standardeinteilung, die in Form von Parametern gespeichert ist, haben. Wird die geforderte Winkelstellung nicht erreicht oder kann sie nicht eingehalten werden, z. B. weil die auf das Bearbeitungswerkzeug einwirkende Kraft und das damit bezogen auf die Schaltachse 12 auftretende Drehmoment zu groß ist oder zu groß geworden ist, wird über die Regelung ein Signal 156 zum Abschalten der Drehmaschine gegeben.

Mit einem wie hier vorgesehenen Revolverantrieb können auch Revolver mit ganz verschiedenen Teilungen, die jeweils optimal auf das Werkstückspektrum abgestimmt werden können, austauschbar verwendet werden.

Das voranstehend erläuterte Ausführungsbeispiel der Erfindung ist für eine Drehmaschine mit Schrägbett beschrieben worden. Die Erfindung läßt sich aber wie ersichtlich auch für Drehmaschinen mit anders gelagertem d. h. in anderer Ebene verschiebbarem Revolver verwenden.

## Patentansprüche

1. Revolver (1) für Bearbeitungswerkzeuge (15, 16) auf einer Drehmaschine (3), der auf einem Planschlitten angeordnet ist, welcher senkrecht zur Spindelachse (10) der Drehmaschine (3) auf einem Bettschlitten (5) verfahrbar ist, der seinerseits parallel zur Spindelachse (10) verfahrbar ist, wobei einen ersten Satz von Bearbeitungswerkzeugen bildende Innendrehwerkzeuge (16) in äquidistanten Abständen auf einem Kreis um die parallel oder nahezu parallel zur Spindelachse (10) verlaufende Schaltachse (12) des Revolvers (1) angeordnet sind, wobei ferner einen zweiten Satz bildende Bearbeitungswerkzeuge, von denen mindestens eines ein Außendrehwerkzeug (15) ist, mit ihren Schneidenspitzen außerhalb des Kreises (111) des ersten Satzes so angeordnet sind, daß zwischen zwei Bearbeitungswerkzeugen des einen Satzes jeweils ein Bearbeitungswerkzeug des anderen Satzes angeordnet ist, wobei weiterhin der Abstand der Schneidenspitzen eines Außendrehwerkzeuges (15) zu den beiden benachbarten Innendrehwerkzeugen (16) des ersten Satzes gleich oder annähernd gleich groß ist, und wobei schließlich die Schneidenspitze des jeweils in Bearbeitungsposition geschalteten Bearbeitungswerkzeuges etwa in einer parallel zum Bett des Bettschlittens (5) und durch die Spindelachse (10) verlaufenden Ebene liegt, dadurch gekennzeichnet, daß die Schaltachse (12) vom Bett des Bettschlittens (5) einen größeren Abstand (114) als die Spindelachse (10) hat, und daß der Revolver (1) mit ungleichen Schaltwinkeln ($\gamma$, $\delta$) umschaltbar ist.

2. Revolver nach Anspruch 1, mit auf dem Kreis angeordneten Bohrungen zur Aufnahme von Halterungen für die Bearbeitungswerkzeuge des ersten Satzes, dadurch gekennzeichnet, daß der Revolver (1) zur Aufnahme von Halterungen für die Bearbeitungswerkzeuge (15) des zweiten Satzes weitere Bohrungen (13) aufweist, die in äquidistanten Abständen auf einem den Kreis (111) konzentrisch umgebenden weiteren Kreis (113) angeordnet sind und daß die jeder Bohrung (13) benachbarten beiden Bohrungen (11) auf dem anderen Kreis (111) gegenüber der erstgenannten Bohrung (13) einen ungleichen Winkelabstand ($\alpha$, $\beta$) haben.

3. Revolver nach Anspruch 1 oder 2, gekennzeichnet dadurch, daß die Abstände (a) von der Spitze (Wirkstelle) eines eingespannten Außenbearbeitungswerkzeuges (15) einerseits zu den beiden Bohrungen (11) des inneren Teilkreises (111) der Halterungen der Innenbearbeitungswerkzeuge andererseits gleich groß sind.

4. Revolver nach Anspruch 3, gekennzeichnet dadurch, daß auch der Abstand zweier benachbarter Bohrungen (11) des inneren Teilkreises (111) der Halterungen der Innenbearbeitungswerkzeuge gleich den Abständen (a) zwischen Spitze und Bohrungen (11) ist (Fig. 1).

5. Revolver nach einem der Ansprüche 1 bis 4, gekennzeichnet dadurch, daß für seine Schaltbewegung ein regelbarer Antriebsmotor (54) und ein Winkelgeber (55) vorgesehen sind.

6. Revolver nach Anspruch 5, gekennzeichnet dadurch, daß als Antriebsmotor ein Gleichstrom-Motor (54) vorgesehen ist.

7. Revolver nach einem der Ansprüche 1 bis 6, dadurch gekennzeichnet, daß eine Bremse (60) zum Abbremsen des Revolvers (1) vorgesehen ist.

8. Revolver nach einem der Ansprüche 1 bis 7, dadurch gekennzeichnet, daß eine hydraulische Arretiervorrichtung (61) für den Revolver (1) vorgesehen ist.

9. Revolver nach einem der Ansprüche 1 bis 8, dadurch gekennzeichnet, daß ein Sollwertgeber (57) für die Einspeicherung der jeweiligen Schaltwinkel des Revolvers (1) für numerische Steuerung vorgesehen ist.

10. Revolver nach Anspruch 9, gekennzeichnet dadurch, daß die Schaltwinkel durch eingegebene Korrekturwerte veränderbar sind.

11. Revolver nach einem der Ansprüche 1 bis 10, gekennzeichnet dadurch, daß ein Regler (56) mit einem Signalausgang für das Stillsetzen der Drehmaschine (3) bei nicht einhaltbarem Sollwert der Winkeleinstellung vorgesehen ist.

**Claims**

1. Turret (1) for cutting tools (15, 16) on a rotating machine (3) which turret is mounted on a cross slide rest which is slidable perpendicular to a spindle axis (10) along a carriage (5), which itself is slidable parallel to the spindle axis (10) of the rotating machine (3), a first inner set of cutting tools (16) being pivotally mounted at equal distances apart on a circle (111) concentric with an axis (12) of the turret (1) which axis runs parallel or nearly parallel to the spindle axis (10), a second set of cutting tools, of which at least one is an outer tool (15), being pivotally mounted with their cutting tips outside the circle (111) of the first set, so that between two cutting tools of one set one cutting tool of the other set is arranged, the distance of the cutting tip of an outer tool (15) from two neighbouring inner tools (16) of the first set being moreover the same or nearly the same, and finally the cutting tip of the tool engaged in the working position lying roughly in a plane which is parallel to the bed of the carriage (5) and which passes through the spindle axis (10), characterised in that the axis (12) is a greater distance (114) from the bed of the carriage (5) than from the spindle axis (10) and that the turret (1) can be turned through unequal angles $(\gamma, \delta)$.

2. Turret according to claim 1 with bores for the reception of mounting supports for the cutting tools of the first set, the bores being arranged on the circle, characterised in that the turret (1) for the reception of mounting supports for the cutting tools (15) of the second set has further bores (13) which are arranged at equal distances apart on a further circle (113) concentrically surrounding the circle (111), and that for each bore (13) and two neighbouring bores (11) the angles $(\alpha, \beta)$ between the radii passing through the bore (13) and the two bores (11) are unequal.

3. Turret according to claims 1 or 2, characterised in that the distances (a) from the cutting tip of a clamped outer cutting tool (15) on the one hand, to both neighbouring bores (11) on the inner circle (111) for the mounting supports of the inner tools are the same.

4. Turret according to claim 3, characterised in that the distance between two neighbouring bores (11) on the inner circle (111) for the mounting supports of the inner tools is also equal to the distance (a) between the cutting tip and the bores (11).

5. Turret according to any one of claims 1 to 4, characterised in that an adjustable drive motor (54) and an angle measuring device (55) are provided.

6. Turret according to claim 5, characterised in that the drive motor (54) is a D. C. motor.

7. Turret according to any one of claims 1 to 6, characterised in that a brake (60) is provided for braking the turret (1).

8. Turret according to any one of claims 1 to 7, characterised in that a hydraulic arresting device is provided for the turret (1).

9. Turret according to any one of claims 1 to 8, characterised in that a nominal value measuring device (57) for the storage of the angle of the turret (1) is provided for numerical control purposes.

10. Turret according to claim 9, characterised in that the angles are adjustable by given correction values.

11. Turret according to any one of claims 1 to 10, characterised in that a regulator (56) is provided with a signal outlet for the immobilisation of the rotating machine (3) in a case where it is not possible to adhere to the base value of the angle setting.

**Revendications**

1. Tourelle (1) servant de porte-outils pour une machine-outil (3) telle qu'un tour-revolver; cette tourelle étant montée sur un chariot plan, qui peut coulisser perpendiculairement à l'axe (10) du mandrin de la machine (3), sur un autre chariot (5) pouvant lui-même coulisser parallèlement à l'axe (10) du mandrin, sur une console solidaire du bâti de la machine; un premier jeu d'outils d'usinage par l'intérieur (16) étant monté en des emplacements équidistants, sur un cercle (111) qui entoure l'axe de pivotement (12) de la tourelle (1), axe parallèle ou sensiblement parallèle à l'axe (10) du mandrin; un deuxième jeu d'outils d'usinage, dont au moins un outil de tournage par l'extérieur (15), étant en outre disposé de telle manière que les arêtes coupantes de ces outils se trouvent à l'extérieur du cercle (111) du premier jeu d'outils, et qu'entre deux outils d'usinage de l'un des deux jeux se trouve situé à chaque fois un outil d'usinage de l'autre jeu; la distance de l'arête coupante d'un outil de tournage par l'extérieur (15) étant par ailleurs la même, ou sensiblement la même, par rapport aux deux outils adjacents de tournage par l'intérieur (16) du premier jeu; et enfin l'arête coupante de chaque outil d'usinage amené en position de travail étant sensiblement située sur une parallèle au chariot (5) associé à la console, dans un plan passant par l'axe (10) du mandrin; la tourelle étant caractérisée en ce que l'axe de pivotement (12) présente, par rapport au chariot (5) associé à la console, un écartement (114) supérieur à celui de l'axe (10) du mandrin, et en ce que la tourelle (1) peut être déplacée angulairement suivant des angles de pivotement de valeurs différentes ($\gamma$, $\delta$).

2. Tourelle selon la revendication 1, comportant des trous disposés en cercle pour recevoir des organes de fixation des outils d'usinage du premier jeu; caractérisée en ce que la tourelle (1), pour recevoir des organes de fixation des outils d'usinage (15) du deuxième jeu, comporte d'autres trous (13), disposés à des intervalles égaux sur un autre cercle (113) concentrique au cercle (111) et entourant celui-ci; et en ce que les deux trous (11) situés sur l'autre cercle (111), de part et d'autre de chacun des trous (13), présentent par rapport à ce dernier des distances angulaires inégales ($\alpha$, $\beta$).

3. Tourelle selon l'une des revendications 1 ou 2, caractérisée en ce que, en position de travail, l'écartement (a) de la pointe d'un outil d'usinage par l'extérieur (15) a sensiblement la même valeur, par rapport aux deux trous (11) du cercle de division interne (111) des organes de fixation des outils d'usinage par l'intérieur.

4. Tourelle selon la revendication 3, caractérisée en ce que l'intervalle entre deux trous successifs (11), prévus sur le cercle de division interne (111) pour les organes de fixation des outils d'usinage par l'intérieur, a également la même valeur que les distances (a) existant entre la pointe et les trous (11). (Figure 1).

5. Tourelle selon l'une des revendications 1 à 4, caractérisée en ce qu'un monteur d'entraînement réglable (54) et un dispositif de mise à l'angle (55) sont prévus pour commander ses mouvements de pivotement.

6. Tourelle selon la revendication 5, caractérisée en ce qu'un moteur à courant continu (54) est prévu comme moteur d'entraînement.

7. Tourelle selon l'une des revendications 1 à 6, caractérisée en ce qu'un frein (60) est prévu pour le freinage de la tourelle (1).

8. Tourelle selon l'une des revendications 1 à 7, caractérisée en ce qu'un dispositif hydraulique de blocage (61) est prévu pour la tourelle (1).

9. Tourelle selon l'une des revendications 1 à 8, caractérisée en ce qu'un dispositif d'indexation (57) à commande numérique est prévu pour introduire chacune des valeurs angulaires de consigne pour le pivotement de la tourelle (1).

10. Tourelle selon la revendication 9, caractérisée en ce que la valeur angulaire de consigne pour le pivotement peut être modifiée en introduisant des valeurs de correction.

11. Tourelle selon l'une des revendications 1 à 10, caractérisée en ce qu'un régulateur (56), comportant une sortie pour des signaux d'ordre, est prévu pour provoquer l'arrêt de la machine-outil (3) telle qu'un tour-revolver, en cas de défaut de maintien de la valeur angulaire de consigne.

# FIG.1

FIG.2

hydraulische
Druckflüssigkeit

Regler

Sollwert-
Geber